(19) Europäisches Patentamt / European Patent Office / Office européen des brevets

(11) **EP 4 757 319 A1**

(12) **DEMANDE DE BREVET EUROPEEN**

(43) Date de publication:
**10.06.2026   Bulletin 2026/24**

(21) Numéro de dépôt: **25216989.1**

(22) Date de dépôt: **19.11.2025**

(51) Classification Internationale des Brevets (IPC):
*H04N 21/00* *(2011.01)*

(52) Classification Coopérative des Brevets (CPC):
**H04N 21/2747; H04N 21/274; H04N 21/4147; H04N 21/4334; H04N 21/435; H04N 21/6125; H04N 21/812; H04N 21/8455; H04N 21/8456; H04N 21/8586**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **06.12.2024  FR 2413555**

(71) Demandeur: **Orange**
**92130 Issy-les-Moulineaux (FR)**

(72) Inventeurs:
• **GASTE, Olivier**
  **92326 Chatillon (FR)**
• **MARCHAND, Hervé**
  **92326 Chatillon (FR)**

(54) **PROCÉDÉ DE GESTION DE L' ENREGISTREMENT D'UN CONTENU COMPRENANT UN CONTENU PRINCIPAL ET UN CONTENU SECONDAIRE**

(57) Procédé de gestion de l'enregistrement d'un contenu multimédia incluant un premier contenu (Cp), dit contenu principal, et un deuxième contenu (Cs), dit contenu secondaire, les contenus comprenant des segments temporels ayant des adresses d'accès réseaux respectives depuis lesquelles les segments sont téléchargés via un réseau de communication (RES), caractérisé en ce qu'il comprend suite à la réception d'une demande d'enregistrement du contenu (Cp), un enregistrement de segments ou d'adresses réseaux selon que les segments considérés concernent le contenu principal (Cp) ou le contenu secondaire (Cs).

[Fig. 1]

**Description**

Domaine technique

Le domaine de l'invention est celui des contenus multimédias numériques, à savoir les contenus audio et/ou vidéo numériques.

Plus précisément, l'invention se rapporte à un procédé de gestion de l'enregistrement d'un contenu d'un contenu numérique en vue d'une lecture ultérieure par un dispositif de lecture.

L'enregistrement s'effectue sur un support tel qu'un serveur de stockage. Le serveur peut se situer à distance du dispositif de restitution voire en local.

On verra dans un exemple de réalisation décrit ci-dessous que le dispositif de lecture choisi pour illustrer l'invention est un décodeur de télévision numérique (set top box en anglais) ; Le décodeur visé ici est capable de requérir un accès à un contenu ayant plusieurs qualités disponibles. De tels contenus sont par exemple des contenus utilisés dans un contexte de téléchargement adaptatif progressif (HAS - sigle anglosaxon de « HTTP Adaptive Streaming ») dans lesquels les contenus sont découpés en segments, chaque segment étant disponible selon plusieurs débits d'encodage associés à des qualités de restitution respectives.

Etat de la technique

L'accès à un contenu multimédia, tel que la télévision ou la vidéo à la demande, depuis un réseau de type Internet, est possible aujourd'hui, pour la plupart des terminaux de lecture de contenus multimédias.

Le dispositif de lecture, par exemple un décodeur, émet généralement une requête à destination d'un serveur en indiquant un contenu multimédia choisi. Le décodeur reçoit en retour le contenu multimédia demandé. Dans le cadre d'un réseau de communication local, une telle requête transite par une passerelle d'accès au réseau, par exemple une passerelle résidentielle/domestique.

Le dispositif de lecture est adapté pour recevoir ces contenus numériques sous forme de données multimédia et pour requérir une restitution sur un dispositif de restitution. Cette restitution consiste à fournir, au niveau du dispositif de lecture, le contenu numérique au dispositif de restitution sous une forme accessible à l'utilisateur. Par exemple, des données reçues correspondant à une vidéo sont généralement décodées par le dispositif de lecture de contenus, puis restituées au niveau du dispositif de restitution sous la forme d'un affichage de la vidéo correspondante avec sa bande-son associée. Dans la suite, par souci de simplification, on assimilera le contenu numérique à une vidéo et la restitution par le dispositif, ou consommation par l'utilisateur du dispositif, à une visualisation sur l'écran du dispositif.

La diffusion de contenus numériques sur Internet est souvent basée sur des protocoles client-serveur de la famille HTTP (de l'anglais « Hyper Text Transport Protocol »). En particulier, le téléchargement en mode progressif des contenus numériques, aussi appelé streaming, permet de transporter et consommer les données en temps réel, c'est-à-dire que les données numériques sont transmises sur le réseau et décodées par le dispositif de lecture au fur et à mesure de leur arrivée. Le dispositif de lecture reçoit et stocke une partie des données numériques dans une mémoire tampon avant de commander la restitution au dispositif de restitution. Ce mode de distribution est particulièrement utile quand le débit dont dispose l'utilisateur n'est pas garanti pour le transfert en temps réel de la vidéo.

La consommation de contenus numériques en téléchargement progressif adaptatif tend à se démocratiser. Elle est notamment utilisée par de nombreux services de streaming (en français, diffusion en mode continu, ou lecture en continu), mais également par certains décodeurs de télévision numérique, ou set-top-box, qui l'utilisent pour accéder à des contenus délinéarisés, tels que la vidéo à la demande (VOD), la diffusion en différé de programmes télévisuels (Replay), ou encore les offres de type Network nPVR (pour « Network Personal Video Recorder », i.e. un service d'enregistrement des contenus numériques, effectué par le fournisseur de contenus lui-même plutôt qu'au domicile de l'utilisateur final).

La fonctionnalité nPVR permet à un utilisateur de service TV en direct d'enregistrer dans un espace de stockage réseau un contenu diffusé en direct. Ce contenu ainsi enregistré peut alors être consommé depuis n'importe quel accès internet par cet utilisateur. Cet espace nPVR possède une capacité de stockage qui est limitée (par exemple 20Go), l'utilisateur a donc la possibilité de venir enregistrer des contenus dans la limite autorisée.

Quand l'utilisateur accède a un contenu qui a été enregistré, le contenu demandé, dit contenu principal, est restitué mais également les différents des contenus secondaires tels que des tunnels de publicités diffusés au cours de la diffusion du contenu principal.

Un problème lié au stockage de contenus secondaires, contenus non demandés voire non souhaités, est que ces derniers peuvent représenter une part non négligeable du volume de contenu enregistré. En effet, en fonction des chaines, des types de contenus ou encore des horaires, des séquences publicitaires peuvent représenter 20 à 25% de la durée du contenu enregistré sur le serveur nPVR. De plus, quand un utilisateur accède à un contenu enregistré, il peut le regarder avec un décalage temporel important par rapport à sa diffusion. En définitive, les publicités diffusées en liaison avec un contenu, et donc enregistrées, peuvent ne plus être d'actualité.

L'invention vient améliorer la situation.

Exposé de l'invention

A cet effet, selon un aspect fonctionnel, l'invention a trait à un procédé de gestion de l'enregistrement d'un contenu multimédia incluant un premier contenu (Cp), dit contenu principal, et un deuxième contenu (Cs), dit contenu secondaire, les contenus comprenant des segments temporels ayant des adresses d'accès réseaux respectives depuis lesquelles les segments sont téléchargés via un réseau de communication, caractérisé en ce qu'il comprend suite à la réception d'une demande d'enregistrement du contenu, un enregistrement de segments ou d'adresses réseaux selon que les segments considérés concernent le contenu principal ou le contenu secondaire.

Selon l'invention, tous les segments voués à être téléchargés lors d'un accès à un contenu ne sont pas téléchargés ; en effet, lorsque le contenu comprend un contenu principal et un contenu secondaire tel qu'une publicité, des segments relatifs au contenu secondaire ne sont pas enregistrés ; à la place des segments, des adresses sont enregistrées.

Comme la taille des adresses est largement inférieure à la taille d'un segment, la quantité de données stockée résultant d'une demande d'accès à un contenu est largement diminuée. En outre, du fait de la diminution de la taille des données transmises, la bande passante occupée pour la transmission du contenu en vue de son enregistrement est diminuée par rapport à l'état de la technique.

Aussi, autre avantage non négligeable, du fait qu'une adresse réseau est enregistrée à la place d'un segment, le contenu secondaire peut varier au fil du temps et être adapté à un profil utilisateur. Par exemple, si le contenu secondaire est une publicité, et l'utilisateur accédant au contenu est un enfant, la publicité téléchargée peut être une publicité ciblée par exemple une publicité relative à des jouets.

Selon un premier mode de mise en œuvre particulier de l'invention, les segments étant décrits dans un fichier de description, le procédé comprend une étape de distinction entre les segments décrits relatifs au premier contenu et ceux relatifs au contenu secondaire. La distinction s'effectue donc à la volée par le dispositif de lecture. Ce mode évite un traitement côté émetteur pour distinguer les segments relatifs au contenu principal ou au contenu secondaire. Selon une variante, le traitement pourrait être réalisé par l'émetteur des segments de contenu.

En supposant que le contenu secondaire comprend une pluralité de sous-contenus le procédé de l'invention peut s'appliquer à tous les sous-contenus. Selon une variante possible, l'étape de transmission s'exécute que pour une partie des sous-contenus. Ce mode est intéressant lorsque le contenu secondaire est un contenu ne nécessite pas d'être lié à un profil utilisateur. Un tel contenu secondaire est par exemple un message autre qu'un contenu publicitaire par exemple relatif à une campagne pour la lutte contre une maladie et destinée au plus grand nombre.

Selon un deuxième mode de mise en œuvre particulier de l'invention, qui pourra être mis en œuvre alternativement ou cumulativement avec le précédent mode, le contenu secondaire évolue dans le temps. L'invention est en effet tout à fait adaptée aux contenus secondaires évoluant dans le temps tels que la publicité.

Selon encore un troisième mode de mise en œuvre particulier de l'invention, qui pourra être mis en œuvre alternativement ou cumulativement avec les précédents modes, les adresses mémorisées sont effacées de la mémoire au-delà d'une certaine durée. Ce mode est intéressant lorsque le contenu secondaire a été restitué un certain nombre de fois. L'effacement permet de gagner en espace mémoire.

Selon encore un quatrième mode de mise en œuvre particulier de l'invention, qui pourra être mis en œuvre alternativement ou cumulativement avec les précédents modes, les adresses réseaux sont remplacées par des segments d'un contenu secondaire ultérieurement. Ce mode permet d'enregistrer un contenu incluant un contenu principal et un contenu secondaire qui ne nécessite plus de varier dans le temps.

Selon un aspect matériel, l'invention se rapporte à une entité de gestion de l'enregistrement d'un contenu multimédia incluant un premier contenu, dit contenu principal, et un deuxième contenu, dit contenu secondaire, les contenus comprenant des segments temporels ayant des adresses d'accès réseaux respectives depuis lesquelles les segments sont téléchargés via un réseau de communication, caractérisé en ce qu'il comprend un module d'enregistrement apte à, suite à la réception d'une demande d'enregistrement du contenu, réaliser un enregistrement de segments ou d'adresses réseaux selon que les segments considérés concernent le contenu principal ou le contenu secondaire.

Selon un autre aspect matériel, l'invention se rapporte à un serveur de stockage de contenus multimédias comprenant une entité telle que définie ci-dessus.

Selon un autre aspect matériel, l'invention se rapporte à un dispositif de lecture de contenus multimédias comprenant une entité telle que définie ci-dessus.

Selon un autre aspect matériel, l'invention se rapporte à un programme d'ordinateur apte à être mis en œuvre sur un dispositif de lecture de contenus multimédias, le programme comprenant des instructions de code qui, lorsqu'il est exécuté par un processeur, réalise les étapes du procédé définies dans le procédé défini ci-dessus.

Selon un autre aspect matériel, l'invention se rapporte à un support de données sur lequel a été mémorisée au moins une série d'instructions de code de programme pour l'exécution d'un procédé tel que défini ci-dessus.

Le support de données peut être n'importe quelle entité ou dispositif capable de stocker le programme. Par exemple, le support peut comporter un moyen de stockage, tel qu'une mémoire RAM, une mémoire ROM, par exemple un CD ROM ou une ROM de circuit microélectronique, ou encore un moyen d'enregistrement magnétique tel qu'un un disque dur. D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet. Alternativement, le support d'informations peut être un circuit intégré dans lequel le programme est incorporé, le circuit étant adapté pour exécuter ou pour être utilisé dans l'exécution du procédé en question.

Enfin, signalons ici que, dans le présent texte, le terme « module » ou « entité » peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en œuvre une fonction ou un ensemble de fonctions telles que décrites pour les modules concernés. De la même manière, un composant matériel correspond à tout élément d'un ensemble matériel (ou hardware) apte à mettre en œuvre une fonction ou un ensemble de fonctions pour le module concerné (circuit intégré, carte à puce, carte à mémoire, etc.).

L'invention sera mieux comprise à la lecture de la description qui suit, donnée à titre d'exemple et faite en référence aux dessins annexés sur lesquels :

[Fig. 1] représente un système informatique dans lequel l'invention peut être mise en œuvre.

[Fig. 2] illustre de façon schématique la structure matérielle d'un serveur de stockage incluant une entité de gestion selon un mode de réalisation de l'invention;

[Fig. 3] présente une vue schématique des différents segments d'un contenu principal ;

[Fig. 4] présente une vue des échanges de données entre le serveur de contenus et le serveur de stockage en réseau selon un mode de réalisation de l'invention.

[Fig. 5] présente une vue synthétique du résultat d'une phase d'enregistrement du contenu ; l'enregistrement comprenant des segments de contenu relatifs au contenu principal et des adresses réseau relatives au contenu secondaire.

Description détaillée de modes de réalisation de l'invention

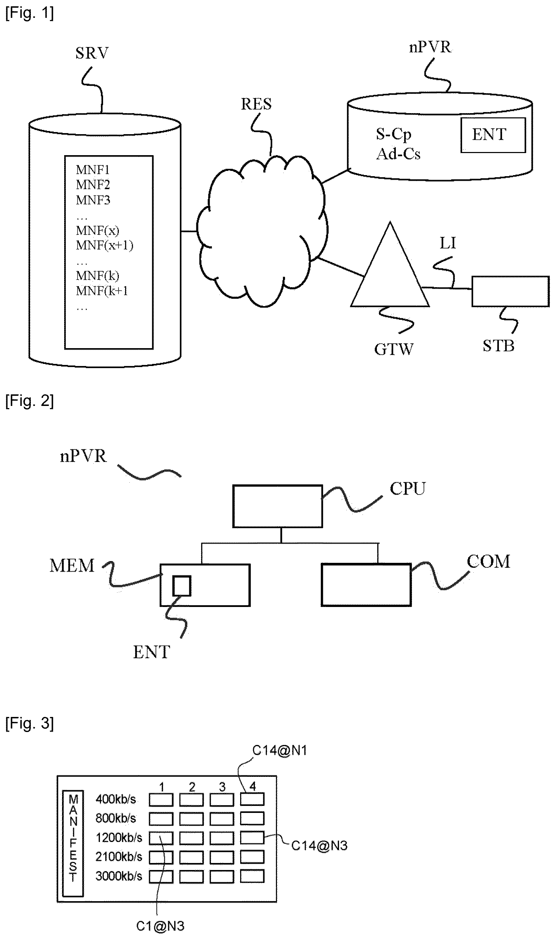

La figure 1 représente un système informatique SYS dans lequel est mis en œuvre un réseau de diffusion de contenus appelé CDN (Content Distribution Network) par l'homme du métier depuis lequel sont transmis des contenus à destination de dispositifs clients ou dispositifs de lecture de contenus et des fichiers de description associés aux contenus multimédias.

Dans notre exemple, le système SYS comprend un seul dispositif de lecture STB. Cependant l'invention s'applique à un nombre quelconque de dispositifs de lecture.

Le dispositif de lecture est par exemple un dispositif de lecture numérique tel qu'un décodeur.

Le contenu multimédia visé ici est un contenu vidéo correspondant par exemple à une chaîne de télévision sur laquelle sont diffusés des programmes télévisés dits Live c'est-à-dire diffusés en temps réel. Un programme Live peut être un programme dont la captation s'effectue en direct (par exemple un événement sportif) ou dont la captation a déjà été effectuée (par exemple une émission de télévision enregistrée par la chaîne)

Dans notre exemple, le dispositif de lecture STB est connecté à un terminal de restitution TV tel qu'une télévision.

Dans notre exemple, le dispositif de lecture STB est connecté sur un port du dispositif de restitution TV ; le dispositif de lecture STB et le dispositif de restitution TV pourrait aussi former un seul et unique dispositif.

Dans notre exemple, le dispositif de lecture STB est situé dans un réseau local LAN (sigle anglosaxon de « Local Area Network ») géré par une passerelle domestique GTW. Le contexte du réseau local est donné à titre d'exemple et pourrait être transposé aisément à un réseau Internet de type « best effort », un réseau d'entreprise, etc. On verra dans la suite que le dispositif de lecture STB comprend une première entité de gestion ENT1.

La passerelle GTW est apte à communiquer via une liaison de communication LI qui peut être un réseau de télécommunication tel qu'un réseau étendu WAN connu de l'homme du métier.

Le système informatique SYS met en œuvre un réseau de diffusion de contenus appelé CDN (Content Distribution Network) par l'homme du métier depuis lequel des contenus sont transmis à destination de dispositifs clients ou dispositifs de lecture de contenus STB.

Le réseau CDN est constitué de serveurs reliés en réseau dans le réseau étendu ; ces serveurs coopèrent afin de mettre des contenus multimédias à disposition des utilisateurs en mode unicast. Afin de simplifier l'exposé de l'invention, un seul serveur de contenus SRV sera représenté sur la figure 1 pour représenter le CDN. Le serveur de contenus SRV se trouve, dans notre exemple, dans le réseau étendu WAN référencé RES.

Le serveur de contenus SRV reçoit par exemple des chaînes de contenus de télévision numérique en provenance d'un réseau de télévision diffusée (non représenté), et les met à disposition en temps réel à des terminaux clients, ici le dispositif de lecture STB.

Dans notre exemple, les contenus Cp sont mis à disposition en mode unicast dans un format donné. Un tel contenu Cp est, par exemple, un contenu téléchargé en mode de streaming adaptatif. La norme MPEG-DASH (pour l'anglais "Dynamic Adaptive Streaming over HTTP", en français « diffusion en flux adaptatif dynamique sur HTTP ») est un standard de format de diffusion audiovisuelle sur Internet ; ce standard se base sur la préparation du contenu en différentes représentations de qualité et débit variables, découpées en segments de courte durée (de l'ordre de quelques secondes), également appelés « chunks » par l'homme du métier. Chacun de ces segments est rendu disponible individuellement au moyen d'un protocole d'échange entre le terminal de restitution et le serveur fournisseur de contenus multimédias. Le protocole principalement ciblé est le protocole HTTP, mais d'autres protocoles (par exemple FTP) peuvent également être utilisés. L'organisation des segments et les paramètres associés sont publiés dans un fichier de description au format XML. Nous ne rentrerons pas plus dans les détails de ce mode de téléchargement car sans intérêt pour l'exposé de l'invention.

Un exemple de fichier Manifest ou « fichier de description » (MPD) conforme à la norme MPEG-DASH et comportant la description de contenus disponibles dans trois qualités différentes (N1 = 512 kb/s, N2 = 1024 kb/s, N3 = 2048 kb/s) des contenus fragmentés (ou segmentés) est présenté en Annexe 1. Ce fichier de description simplifié décrit des contenus numériques dans une syntaxe XML (de l'Anglais « extended Markup Language»), comprenant une liste de contenus sous forme de segments classiquement décrits entre une balise ouvrante (<SegmentList>) et une balise fermante (</SegmentList>). La découpe en segments permet notamment de s'adapter finement aux fluctuations de la bande passante. Chaque segment correspond à une certaine durée (champ « duration ») avec plusieurs niveaux de qualité et permet de générer leurs adresses (URL - Uniform Resource Locator). Cette génération est faite dans cet exemple à l'aide des éléments « BaseURL » (« HTTP://server.com») qui indique l'adresse du serveur de contenus et « SegmentURL » qui liste les parties complémentaires des adresses des différents segments :

- « Cp_512kb_1.mp4 » pour le premier fragment du contenu « Cp » à 512 kilobits par seconde (« kb ») au format MPEG-4 (« mp4 »),

- « Cp_512kb_2.mp4 » pour le second fragment,

- etc.

La figure 2 représente une architecture d'un serveur de stockage nPVR. Ce serveur de stockage nPVR comprend, classiquement, des mémoires MEM associées à un processeur CPU. Les mémoires peuvent être de type ROM (de l'anglais « Read Only Memory ») ou RAM (de l'anglais « Random Access Memory ») ou encore Flash.

Le serveur de stockage nPVR peut transmettre un contenu à restituer au STB via le réseau RES et la passerelle GTW.

Le dispositif de lecture STB communique avec la passerelle GTW via un module Ethernet pour une communication locale avec fils ou via un module radio de type WiFi pour une communication locale sans fils avec la passerelle résidentielle GTW.

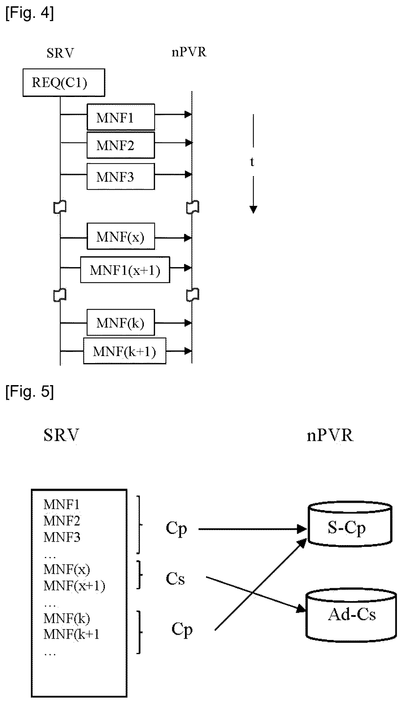

On présente désormais à titre informatif, en relation avec la figure 4, une vue schématique d'un contenu principal Cp découpé en segments et stocké dans le serveur de contenus SRV. Plus précisément, le serveur de contenu HAS expose une vidéo Cp sous forme de segments C1i@Nj encodés à différents débits d'encodage Nj, où l'indice i désigne un identifiant temporel du segment C1i@Nj.

Le module de téléchargement HAS, appelé mode de téléchargement classique ci-dessous, du dispositif de lecture STB est chargé de venir récupérer les segments auprès du serveur de contenu HAS en choisissant la qualité vidéo Nj en fonction de la ressource réseau disponible. On ne décrit pas ici plus en détail la façon dont le module de téléchargement HAS choisit le débit d'encodage du prochain segment vidéo à télécharger. On rappelle que, le plus souvent, le principe général de tels algorithmes repose sur le téléchargement d'un premier segment au débit d'encodage le plus faible proposé dans le fichier de description, et sur l'évaluation du temps de récupération de ce premier segment. Sur cette base, le module de téléchargement HAS évalue si, en fonction de la taille du segment et du temps mis pour le récupérer, les conditions réseau permettent de télécharger le segment suivant à un débit d'encodage plus élevé. Certains algorithmes reposent sur une augmentation progressive du niveau de qualité des segments de contenu téléchargés ; d'autres proposent des approches plus risquées, avec des sauts dans les niveaux des débits d'encodage des segments successifs.

Dans le cas classique, si un segment vidéo dure trois secondes, la récupération du segment par le module de téléchargement HAS ne doit pas excéder 3 secondes, afin de permettre une restitution sans interruption du contenu par le dispositif de lecture STB. Il convient donc pour le module de téléchargement HAS d'opérer le meilleur compromis entre une qualité de restitution, et donc un débit d'encodage, aussi élevés que possible, et le temps de téléchargement du segment, qui doit être suffisamment faible pour permettre une restitution en continu sur le téléviseur TV.

Dans un premier temps, le module HAS récupère le fichier de description qui correspond au contenu vidéo Cp afin de découvrir les segments disponibles du contenu vidéo Cp, et les différentes qualités vidéo Nj associées. Dans l'exemple de la figure 4, le contenu Cp est par exemple proposé sous forme de segments de durée 3s, avec un premier débit d'encodage N1 = 400 kb/s, un deuxième débit d'encodage N2 = 800 kb/s, un troisième débit d'encodage N3 = 1200 kb/s, etc.

Dans un mode de fonctionnement normal, non illustré sur la figure 4, le module HAS opère le téléchargement par exemple, des segments successifs C11@N1 (soit le premier segment temporel à un débit d'encodage de 400 kb/s), puis C12@N3 (soit le deuxième segment temporel à un débit d'encodage de 1200 kb/s), puis C13@N3 (soit le troisième segment temporel à un débit d'encodage de 1200 kb/s), etc.

Les différents segments téléchargés par le module de téléchargement HAS sont ensuite transmis à un module d'affichage apte à requérir un affichage sur un écran de télévision.

L'algorithme mis en œuvre par le module de téléchargement HAS pour déterminer quel segment à quel débit d'encodage doit être téléchargé en mode de fonctionnement normal est sans intérêt pour l'exposé de l'invention. Cet algorithme ne sera donc pas décrit ici plus en détail.

Quand un utilisateur accède à un flux Live diffusé en temps réel (contenu Live) en http Adaptative Streaming (HAS), le dispositif de lecture STB, sous-entendu l'entité HAS installé sur ce dispositif, récupère en général toutes les 2 secondes un fichier de description, ci-après appelé fichier de description temps réel, qui décrit généralement les soixante dernières secondes du flux (30 segments de 2 secondes). On peut alors décider de stocker en mémoire (buffer) une certaine partie du flux (jusqu'à 60 secondes au maximum donc) ; les segments vidéo sont de courte durée car on souhaite être au plus proche du vrai Live c'est-à-dire de l'événement filmé, par exemple un match de Football. C'est également pour cette raison qu'on récupère le fichier de description toutes les deux secondes et qu'on limite la profondeur de buffer en général autour de quinze secondes afin de ne pas engendrer un décalage trop important entre le match de Football et sa restitution sur un écran.

Au lieu d'être lu par le dispositif de lecture STB, le contenu peut aussi être enregistré sur un serveur de stockage de type nPVR en vue d'une éventuelle lecture ultérieurement par un dispositif de lecture STB. Cet enregistrement est souvent réalisé sur requête issue du dispositif de lecture STB. Dans ce cas, dans notre exemple, le principe du téléchargement depuis le serveur SRV et le serveur de stockage nPVR est le même que celui décrit ci-dessus entre le serveur STRV et le dispositif de lecture STB.

Lors d'un enregistrement sur le serveur nPVR, comme indiqué dans la partie consacrée à l'état de la technique, tous les segments sont enregistrés sur le serveur nPVR. Or, le contenu inclut très souvent le contenu « demandé », dit contenu principal, et un contenu « non demandé » voire non souhaité.

Selon l'invention, suite à la réception d'une demande d'enregistrement du contenu Cp, le procédé comprend un enregistrement de segments ou d'adresses réseaux selon que les segments considérés concernent le contenu principal (Cp) ou le contenu secondaire (Cs). Le procédé comprend deux phases :

- Une première phase au cours de laquelle le serveur SRV télécharge des fichiers de description associé à la demande d'accès au contenu Cp vers le serveur de stockage nPVR ;
- Une deuxième phase au cours de laquelle le dispositif de lecture STB accède au contenu sur le serveur de stockage nPVR.

En référence à la figure 5, comme indiqué ci-dessus, lors de la première phase, le serveur nPVR enregistre les segments du contenu Cp ou des URL selon que le contenu est le contenu principal ou le contenu secondaire. Des étapes de mises en œuvre sont décrites ci-dessous :

Lors d'une première étape, le dispositif de lecture STB transmet une requête d'accès REQ(Cp) au contenu Cp. Cette requête est classique et ne sera pas pour cette raison décrite davantage .

Le serveur SRV reçoit la requête et l'exécute.

Le serveur SRV transmet en retour les fichiers de description produits successivement les uns après les autres à destination du serveur de stockage nPVR. Dans notre exemple, les fichiers suivants sont transmis :

$$MNF1/MNF2/MNF3/.../MNF(x)/MNF(x+1)/.../MNF(k)/MNF(k+1)$$

X et k sont des entiers positifs

Une entité de gestion ENT présente sur le serveur de stockage nPVR, ou externe au serveur nPVR et apte à communiquer avec le serveur nPVR, est chargée d'analyser les fichiers de description reçus par le serveur nPVR et de détecter les adresses réseaux relatives au contenu principal et les adresses réseaux relatives à un contenu secondaire. Repréçisons ici qu'un contenu secondaire Cs concerne par exemple une publicité, ou une série de publicités communément appelée « tunnel de publicités ».

Lorsque l'entité ENT reçoit les différents fichiers de description successivement, l'entité de gestion ENT détecte parmi les adresses réseaux reçues celles qui concernent le contenu principal et celles qui concernent le contenu secondaire.

On suppose que les fichiers de description MNF1/MNF2/MNF3 et suivants jusqu'au fichier de description MNF(x) concernent le contenu principal. On suppose que les fichiers de description MNF(x) et MNF(x+1) concernent un contenu secondaire CS. On suppose aussi que les fichiers de description MNF(x+2) et suivants incluant les MNFk/MNF(k+1) concernent le contenu principal Cp.

Les fichiers de description précédents sont ordonnés temporellement selon leur date de production respectives $t_{MNFi}$, i étant un indice permettant de placer temporellement l'instant considéré « t » :

$$t_{MNF1} < t_{MNF2} < t_{MNF3} < ... < t_{MNFx} < t_{MNF(x+1)} < ... < t_{MNFk} < t_{MNF(k+1)}$$

Suite à la réception du premier fichier de description MNF1, le serveur nPVR lit le fichier, détecte que le contenu concerné est le contenu principal Cp, et télécharge les segments décrits en conséquence.

L'entité de gestion ENT réalise les mêmes étapes pour les fichiers de description suivant jusqu'au fichier de description MNF(x).

Suite à la réception de ce fichier MNF(x), l'entité de gestion ENT détecte que des segments décrits dans ce fichier de description MNF(x) concernent un contenu secondaire Cs. Dans ce cas, l'entité de gestion ENT ne télécharge pas les segments associés aux adresses décrites dans ce fichier mais mémorise à la place les adresses réseaux des segments concernés.

De la même manière, l'entité de gestion ENT ne télécharge pas les segments associés aux adresses décrites dans le fichier suivant mais mémorise à la place les adresses réseaux des segments concernés. L'entité poursuit le stockage des adresses réseau jusqu'à ce que les adresses concernent des adresses relatives au contenu principal Cp à savoir dans notre exemple jusqu'au fichier MNF(k).

Supposons que le serveur nPVR télécharge maintenant le fichier de description MNF(k) et ensuite le fichier MNF(k+1). Dans ce cas, le fichier de description MNF(k) concernant le contenu principal Cp, l'entité de gestion ENT télécharge de nouveau les segments de contenu et les mémorise en vue d'une utilisation ultérieure ; idem pour le fichier MNF(k+1) reçu ensuite.

A ce stade,

- les segments S-Cp décrits dans les fichiers de description MNF1/MNF2/MNF3 et suivants jusqu'au fichier de description MNF(x) conformément à l'ordre décrit ci-dessus, sont téléchargés et mémorisés en vue d'une lecture ultérieure ;
- les adresses ad-Cs des segments du contenu secondaire Cs sont mémorisées dans le serveur nPVR.

On a vu, dans ce qui précède, que l'entité de gestion est en capacité de distinguer des adresses réseaux associées à un contenu principal Cp des adresses associées à un contenu secondaire Cs. Par exemple, l'entité de gestion ENT lit et détecte dans les fichiers de description des balises introduisant une ou plusieurs adresses réseau relatives à un contenu secondaire Cs.

A noter que sur cette figure 5, seule une partie des messages utiles à la compréhension de l'invention sont illustrés. Par exemple, après réception d'un fichier de description par le serveur de stockage nPVR, ce dernier requiert en principe un accès aux segments décrits dans ce fichier de description reçu ; nous avons choisi de ne pas faire apparaître ces messages d'accès car sans intérêt pour l'exposé de l'invention.

Lors de la deuxième phase d'accès au contenu enregistré, le dispositif de lecture STB accède au serveur nPVR afin de lire un contenu enregistré.

Lors de la lecture du contenu enregistré, des segments ou adresses réseaux enregistrés sur le serveur nPVR sont lus classiquement. Plus précisément, lors de la lecture, lorsque l'entité ENT télécharge une adresse de réseau en liaison avec un contenu secondaire Cs, l'entité de gestion ENT requiert un accès au contenu secondaire associé à cette adresse sur le réseau. On comprend ici que le contenu secondaire lu n'est pas un contenu secondaire enregistré sur le serveur nPVR mais sur un autre serveur mémorisant des contenus secondaires. Si l'émetteur de contenus secondaires est en capacité de mettre à jour les contenus secondaires au fil du temps, le contenu secondaire accédé à un instant donné peut ne pas être le même contenu secondaire à un autre instant. Le contenu secondaire peut donc être choisi en fonction d'un profil utilisateur enfant ou adulte, l'heure de l'accès au contenu Cp, etc.

Le mode de réalisation décrit ci-dessus peut faire l'objet de plusieurs variantes.

Selon une variante, les étapes décrites ci-dessus ne sont exécutées que pour un sous-ensemble de contenus secondaires. Par exemple certains contenus secondaires de type publicité peuvent être des publicités prévues sur une longue durée par l'émetteur de contenus secondaires ; dans ce cas, les segments d'un tel contenu secondaire sont enregistrés dans le serveur nPVR.

Une autre variante possible serait aussi de supprimer un contenu secondaire après un nombre donné de lecture de ce contenu secondaire, par exemple suite à une première visualisation. Cela permet de gagner en espace mémoire.

Selon une autre variante, les adresses réseaux URLs mémorisées dans le serveur nPVR sont effacés de la mémoire au-delà d'une certaine durée pour gagner en espace mémoire.

Selon une autre variante, les adresses réseaux sont remplacées par des segments d'un contenu secondaire. L'entité de gestion est capable dans cette variante de requérir un stockage d'adresses réseaux de contenus secondaires et un remplacement de ces adresses réseaux par des segments à un instant ultérieur.

Précisons ici que le contenu secondaire initiale ayant une durée donnée, le contenu secondaire remplaçant ce dernier aura idéalement la même durée. Un contenu secondaire pouvant rassembler plusieurs sous-contenus, la somme de la durée des sous-contenus sera choisie pour être idéalement la même durée que le contenu secondaire initial.

Dans le cas où la durée du contenu secondaire remplaçant n'est pas la même, le dispositif de lecture STB peut requérir une accélération ou une décélération du contenu secondaire en cours de lecture.

Précisons enfin ici aussi ici que le terme « entité » peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en œuvre une fonction ou un ensemble de fonctions telles que décrites pour les modules concernés. De la même manière, un composant matériel correspond à tout élément d'un ensemble matériel (ou hardware) apte à mettre en œuvre une fonction ou un ensemble de fonctions pour le module concerné (circuit intégré, carte à puce, carte à mémoire, etc.)

Annexe 1

```
<?xml version="1.0"?>
<MPD xmlns:xsi="http://www.w3.org/2001/XMLSchema-instance"
    xmlns="urn:mpeg:DASH:schema:MPD:2011"
    xsi:schemaLocation="urn:mpeg:DASH:schema:MPD:2011 DASH-MPD.xsd"
    type="dynamic" profiles="urn:mpeg:dash:profile:isoff-live:2011">
<Representation id="0" codecs="avc1" mimeType="video/mp4"
width="1024" height="768" startWithSAP="1" bandwidth="46986">
<BaseURL>HTTP://server.com/</BaseURL>
<!-- Contenu C1 à N1=512kb -->
<SegmentBase>
    <Initialization sourceURL="C1_15sec_512kb/C1_512kbit_dash.mp4"/>
</SegmentBase>
<SegmentList duration="10">
    <SegmentURL media="C1_512kb_1.mp4"/>
  <SegmentURL media=" C1_512kb _2.mp4"/> ....
</SegmentList>
<!-- Contenu C1 à N2=1024kb -->
<SegmentBase>
    <Initialization sourceURL="C1_15sec_500kbit/C1_1024kbit_dash.mp4"/>
</SegmentBase>
<SegmentList duration="10">
    <SegmentURL media="C1_512kb_1.mp4"/>....
</SegmentList>
<!-- Contenu C1 à N3=2048kb -->
```

(suite)

```
<SegmentBase>
    <Initialization sourceURL="C1_15sec_512kb /C1_2048kbit_dash.mp4"/>
</SegmentBase>
<SegmentList duration="10">
    <SegmentURL media="C1_2048kb _1.mp4"/>...
</SegmentList>
<!-- Contenu C2 à N1=512kb -->
<SegmentBase>
    <Initialization sourceURL=" C2_15sec_500kbit/C2_512kbit_dash.mp4"/>
</SegmentBase>
<SegmentList duration="10">
    <SegmentURL media=" C2_512kb_1.mp4"/> ....
</SegmentList>
<!-- Contenu C2 à N2=1024kb -->
<SegmentBase>
    <Initialization sourceURL="C2_15sec_500kbit/C1_1024kbit_dash.mp4"/>
</SegmentBase>
<SegmentList duration="10">
    <SegmentURL media="C2_1024kb_1.mp4"/>....
</SegmentList>
<!-- Contenu C2 à N3=2048kb -->
<SegmentBase>
    <Initialization sourceURL="C2_15sec_500kbit/C1_2048kbit_dash.mp4"/>
</SegmentBase>
<SegmentList duration="10">
    <SegmentURL media="C1_2048kbit _1.mp4"/>...
</SegmentList>
....
</SegmentList>
</MPD>
```

**Revendications**

1. Procédé de gestion de l'enregistrement d'un contenu multimédia incluant un premier contenu (Cp), dit contenu principal, et un deuxième contenu (Cs), dit contenu secondaire, les contenus comprenant des segments temporels ayant des adresses d'accès réseaux respectives depuis lesquelles les segments sont téléchargés via un réseau de communication (RES), **caractérisé en ce qu'**il comprend suite à la réception d'une demande d'enregistrement du contenu (Cp), un enregistrement de segments ou d'adresses réseaux selon que les segments considérés concernent le contenu principal (Cp) ou le contenu secondaire (Cs).

2. Procédé de gestion selon la revendication 1, **caractérisé en ce que** les segments sont décrits dans un fichier de description, et **en ce qu'**il comprend une étape de distinction entre les segments décrits relatifs au premier contenu et ceux relatifs au contenu secondaire.

3. Procédé de gestion selon la revendication 2, **caractérisé en ce que** lorsque le contenu secondaire comprend une pluralité de sous-contenus, l'étape de transmission s'exécute que pour une partie des sous-contenus.

4. Procédé de gestion selon la revendication 1, **caractérisé en ce que** le contenu secondaire évolue dans le temps.

5. Procédé de gestion selon la revendication 1, **caractérisé en ce que** les adresses mémorisées sont effacées de la mémoire au-delà d'une certaine durée.

6. Procédé de gestion selon la revendication 5, **caractérisé en ce que** les adresses réseaux sont remplacées par des segments d'un contenu secondaire ultérieurement.

7. Entité de gestion de l'enregistrement d'un contenu multimédia incluant un premier contenu (Cp), dit contenu principal, et un deuxième contenu (Cs), dit contenu secondaire, les contenus comprenant des segments temporels ayant des adresses d'accès réseaux respectives depuis lesquelles les segments sont téléchargés via un réseau de communication (RES), **caractérisé en ce qu'**il comprend un module d'enregistrement apte à, suite à la réception d'une demande d'enregistrement du contenu (Cp), réaliser un enregistrement de segments ou d'adresses réseaux selon que les segments considérés concernent le contenu principal (Cp) ou le contenu secondaire (Cs).

8. Serveur de stockage (NPVR) comprenant une entité telle que définie dans la revendication 7.

9. Dispositif de lecture de contenus multimédias (STB) comprenant une entité telle que définie dans la revendication 7.

10. Programme d'ordinateur apte à être mis en œuvre sur un dispositif de lecture de contenus multimédias tel que défini dans la revendication 6, le programme comprenant des instructions de code qui, lorsqu'il est exécuté par un processeur, réalise les étapes du procédé définies dans l'une des revendications 1 à 6.

[Fig. 1]

[Fig. 2]

[Fig. 3]

[Fig. 4]

SRV          nPVR

REQ(C1)

MNF1

MNF2

MNF3

t

MNF(x)

MNF1(x+1)

MNF(k)

MNF(k+1)

[Fig. 5]

SRV                              nPVR

MNF1
MNF2
MNF3
...                    Cp              S-Cp
MNF(x)
MNF(x+1)              Cs
...
MNF(k)
MNF(k+1)              Cp              Ad-Cs
...

Europäisches
Patentamt
European
Patent Office
Office européen
des brevets

**RAPPORT DE RECHERCHE EUROPEENNE**

Numéro de la demande

EP 25 21 6989

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2015/271541 A1 (GONDER TOM [US] ET AL) 24 septembre 2015 (2015-09-24) * le document en entier * * figures 2-3 * ----- | 1-10 | INV. H04N21/00 |
| A | US 2011/078002 A1 (LEARY PATRICK J [US] ET AL) 31 mars 2011 (2011-03-31) * le document en entier * ----- | 1-10 | |

**DOMAINES TECHNIQUES RECHERCHES (IPC)**

H04N

Le présent rapport a été établi pour toutes les revendications

| Lieu de la recherche | Date d'achèvement de la recherche | Examinateur |
|---|---|---|
| Munich | 26 mars 2026 | Schneiderlin, Jean |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.........................................................................................
& : membre de la même famille, document correspondant

EPO FORM 1503 03.82 (P04C02)

# EP 4 757 319 A1

## ANNEXE AU RAPPORT DE RECHERCHE EUROPEENNE
## RELATIF A LA DEMANDE DE BREVET EUROPEEN NO.

EP 25 21 6989

26-03-2026

| Document brevet cité au rapport de recherche | Date de publication | Membre(s) de la famille de brevet(s) | Date de publication |
|---|---|---|---|
| US 2015271541 A1 | 24-09-2015 | CA 2941117 A1 | 24-09-2015 |
| | | CA 3189286 A1 | 24-09-2015 |
| | | EP 3120565 A2 | 25-01-2017 |
| | | EP 3687175 A1 | 29-07-2020 |
| | | JP 6612768 B2 | 27-11-2019 |
| | | JP 7121693 B2 | 18-08-2022 |
| | | JP 2017519382 A | 13-07-2017 |
| | | JP 2019208210 A | 05-12-2019 |
| | | US 2015271541 A1 | 24-09-2015 |
| | | US 2019158906 A1 | 23-05-2019 |
| | | US 2024048791 A1 | 08-02-2024 |
| | | WO 2015142741 A2 | 24-09-2015 |
| US 2011078002 A1 | 31-03-2011 | AUCUN | |

EPO FORM P0460